# EUROPEAN PATENT SPECIFICATION

(11) **EP 1 795 394 B1**
(45) Date of publication and mention of the grant of the patent: **15.12.2010**
(21) Application number: 04791981.6
(22) Date of filing: 01.10.2004
(51) Int. Cl.: B60R 1/06

(54) **RETRACTABLE DOOR MIRROR**
EINZIEHBARER TÜRSPIEGEL
RETROVISEUR DE PORTE RETRACTABLE

(43) Date of publication of application: 13.06.2007
(73) Proprietor: Murakami Corporation, Shizuoka-shi, Shizuoka, 422-8569 (JP)
(72) Inventor: YAMAUCHI, Kazunari, c/o MURAKAMI CORPORATION, Fujieda-shi, Shizuoka 426-8601 (JP); UMEKI, Kazuyoshi, c/o MURAKAMI CORPORATION, Fujieda-shi, Shizuoka 426-8601 (JP)
(74) Representative: von Kreisler Selting Werner
(86) International application number: PCT/JP2004/014514
(87) International publication number: WO 2006/038270

(56) References cited:
- EP-A- 1 275 558
- JP-A- 2003 212 043
- JP-A- 2003 212 045
- JP-A- 2003 231 442
- JP-U- 1 081 341
- US-A1- 2002 105 740

## Description

The present invention relates to a retractable door mirror attached to a door of a car or the like, for example.

Door mirrors are attached to the doors of cars and many of such door mirrors are of a retractable type in recent years. A door mirror of this type has, for example, a mirror base fixed to an exterior plate of a vehicle, and a mirror body attached onto this mirror base. The mirror body is retractable relative to the mirror base and is so arranged that it folds backward from a neutral position in a use state to retract a mirror and that it folds forward or backward to absorb an external force exerted on the mirror body, so as to ensure safety for pedestrians and others and prevent breakage of the door mirror.

A conventional retractable door mirror of this type is the one disclosed in Japanese Patent Publication No. 5-30994. This retractable door mirror has a stand fixed to a support arm and a rotational shaft stands upright on the stand. A shaft hole of a bracket provided in a visor is fitted onto the rotational shaft and a mirror is attached to the visor. The shaft hole of the bracket is rotatable around the rotational shaft and the shaft hole is rotated around the rotational shaft to rotate the bracket and the visor, whereby the mirror is inclinable with rotation of the visor.
EP-A-1275558 is related to a speed reducer of an electric retractable rear view mirror.
It is recognizable that a spring is arranged between shaft and the first frame (shaft support). The concerned spring urges output gear and the plate attached to shaft in the longitudinal direction of shaft.
As a conclusion, the concerned spring would not urge the shaft support circumferentially inward of the shaft. Same applies to US-A-2002/105740 relating to an electrically powered retractable door mirror for a vehicle.

In the retractable door mirror disclosed in the foregoing Japanese Patent Publication No. 5-30994, the shaft hole of the bracket is fitted onto the rotational shaft of the stand and the mirror is inclined with rotation of the bracket around the rotational shaft. If there is a gap between the shaft hole and the rotational shaft, it will cause so-called flutter, i.e., vibration of the mirror under vibration of the vehicle or exposure to driving wind. Conversely, if the inside diameter of the shaft hole is too small with respect to the outside diameter of the rotational shaft, the shaft hole (support portion of the frame) might fail to rotate smoothly relative to the rotational shaft (shaft), so as to result in impeding the retracting motion of the mirror. Therefore, the conventional retractable door mirror had the problem that extremely strict dimensional control was required for the shaft hole and the rotational shaft.

An object of the present invention is to provide a retractable door mirror capable of suppressing occurrence of flutter or the like between a shaft and a shaft support in a frame, without need for strict dimensional control.

A retractable door mirror according to the present invention, which achieves the above object, is a retractable door mirror comprising: a mirror base to be fixed to a vehicle; a shaft standing upright on the mirror base; a frame having a shaft support fitted to the shaft, and arranged to rotate around the shaft; and a mirror body attached to the frame and arranged to be retractable in a longitudinal direction of the vehicle with rotation of the frame around the shaft;
wherein an elastic portion for urging the shaft support circumferentially inward of the shaft is provided at a contact part between the shaft and the shaft support in the frame.

In the retractable door mirror according to the present invention, the shaft support fitted around the shaft is provided in the frame, and the elastic portion for urging the shaft support circumferentially inward of the shaft in the shaft support is provided in the contact part between the shaft and the shaft support. This elastic portion urges the shaft support against the shaft, so that the shaft support can be kept in contact with the shaft, without need for strict dimensional control. Therefore, it is feasible to suppress occurrence of flutter or the like between the shaft and the shaft support in the frame, without need for strict dimensional control.

The elastic portion can be made in such a form that a notch is formed in the contact part of the shaft support with the shaft, an inside diameter of the shaft support is smaller than an outside diameter of the shaft, and the notch is broadened.

By adopting the form wherein the notch is formed in the contact part of the shaft support with the shaft, the inside diameter of the shaft support is smaller than the outside diameter of the shaft, and the notch is broadened, it is feasible to readily produce the elastic portion.

It is also possible to adopt a form in which there are a plurality of notches formed and in which the plurality of notches are arranged as spaced at equal intervals in a circumferential direction of the shaft support.

When the notches are arranged as spaced at equal intervals, the urging force by the elastic portion is equally imparted, whereby the shaft support can support the shaft in a stable state.

The retractable door mirror according to the present invention is able to suppress occurrence of flutter or the like between the shaft and the shaft support in the frame, without need for strict dimensional control.

Fig. 1 is a front view of a retractable door mirror according to a first embodiment.
Fig. 2 is a sectional view along line II-II in Fig. 1.
Fig. 3 is a perspective view of a state in which a shaft is inserted in a shaft support.
Fig. 4 is a perspective view showing a state in which the shaft support is expanded.
Fig. 5 is a perspective view showing a state in which the shaft support is expanded with insertion of the shaft.
Fig. 6 is a sectional side view of a retractable door mirror according to a second embodiment.

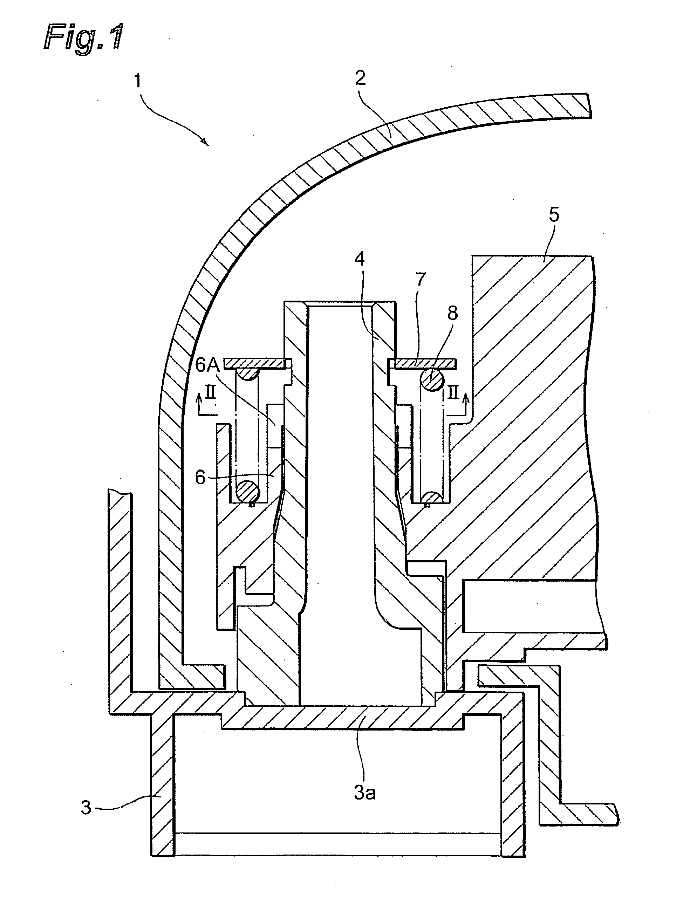

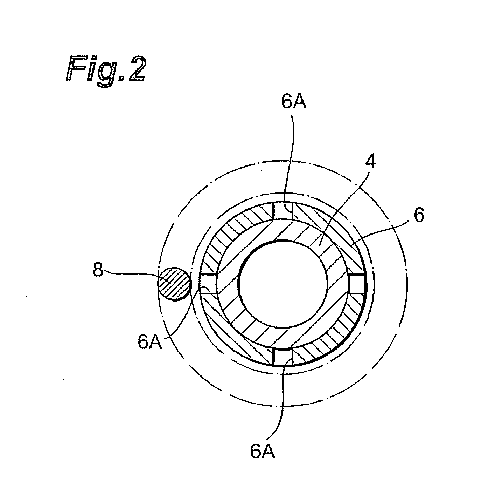

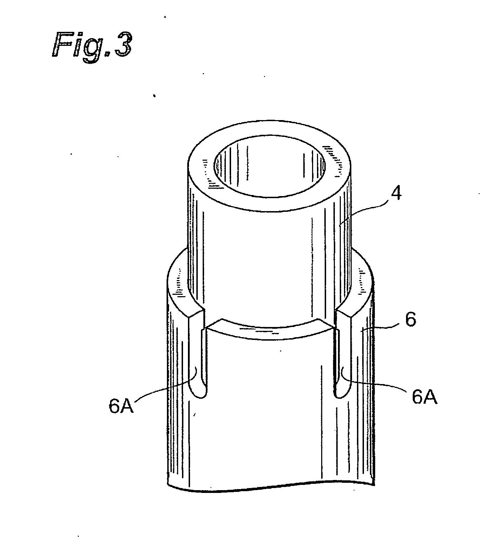

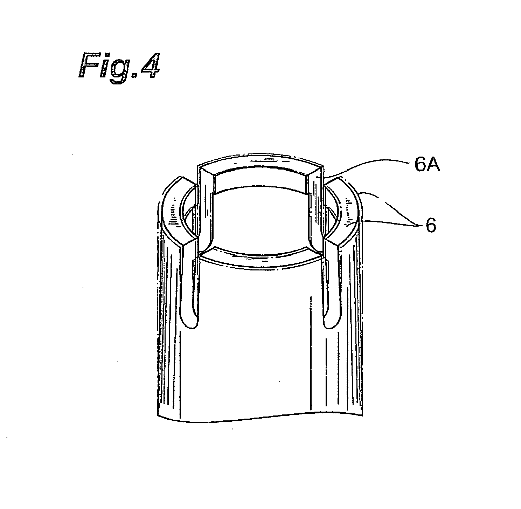

The first embodiment of the present invention will be described below with reference to the drawings. Fig. 1 is a front view of a retractable door mirror according to the first embodiment of the present invention, Fig. 2 a sectional view along line II-II in Fig. 1, Fig. 3 a perspective view of a state in which a shaft is inserted in a shaft support, and Fig. 4 a perspective view showing a state in which the shaft support is expanded.

As shown in Fig. 1, the retractable door mirror 1 of the present embodiment is provided with a mirror body 2. The mirror body 2 is made of resin and has a main body part not shown. A mirror is attached to the front side of this main body part.

The retractable door mirror 1 has a mirror base 3 attached to a side face of a door in a vehicle. The mirror base 3 has a shaft stand 3a projecting approximately horizontally from the side face of the door part of the vehicle, and a shaft 4 stands upright on the shaft stand 3a, as shown in Fig. 2. The shaft 4 is made of resin and in a hollow cylindrical shape. This shaft 4 is housed in the mirror body 2.

Furthermore, the mirror body 2 is fitted with a frame 5. The frame 5 is made of resin, is attached to the mirror body 2 by an unrepresented locking member, and the frame 5 and mirror body 2 move integrally. A shaft support 6 is provided in the side part on the vehicle side in the frame 5.

The shaft support 6 is of an approximately cylindrical, hollow shape and is formed integrally with the main body part of the frame 5. Therefore, the shaft support 6 is also made of resin as the main body part of the frame 5 is. The shaft 4 is inserted into the hollow part of the shaft support 6. The inside diameter of the shaft support 6 is approximately equal to the outside diameter of the shaft 4 in a state in which the shaft 4 is inserted.

In the tip part of the shaft support 6, as shown in Fig. 2, a plurality of notches 6A, four notches in the present embodiment, are formed. These notches 6A are arranged as spaced at equal intervals in the circumferential direction of the shaft support 6. Furthermore, the shaft support 6 is tapered off to the tip in a state before insertion of the shaft 4.

In this state, the inside diameter of the tip part of the shaft support 6 is smaller than the outside diameter of the shaft 4. When the shaft 4 is inserted into the shaft support 6, the tip part of the shaft support 6 is broadened to allow insertion of the shaft 4 into the shaft support 6. Since the shaft support 6 is made of resin, the tip part of the shaft support 6 becomes an elastic portion with such elasticity as to return from a broadened state to a constricted state upon insertion of the shaft 4. The elastic force in this elastic portion serves as an urging force to urge the shaft support 6 circumferentially inward of the shaft 4.

Furthermore, a flange 7 is attached to an upper position of the shaft 4 and a spring 8 is interposed between the flange 7 and the frame 5. An urging force of this spring 8 urges the frame 5 against the mirror base 3.

The shaft 4 is provided with unrepresented stoppers. As the stoppers come into contact with a part of the shaft support 6, they regulate a range of rotation of the mirror body 2 relative to the mirror base 3.

Let us describe the operation and action of the retractable door mirror of the present embodiment having the above-described configuration.

The retractable door mirror 1 of the present embodiment is of a so-called manual type. The mirror body 2 in the retractable door mirror 1 is rotatable around the axis of the shaft 4 and can be located at a neutral position where the mirror is in a use state, at a rear inclined position where the mirror is in a retracted state, and at a front inclined position to which the mirror escapes forward when a man hits the door mirror from the back. For example, when a man pushes the mirror body 2 retracted in the rear inclined state, forward, the mirror body 2 rotates to the use position.

When a man collides with the mirror body 2 in the use state, the mirror body 2 escapes forward to rotate to the front inclined position. The range of rotation to these front inclined position and rear inclined position is regulated by contact of the stopper contact part of the mirror body 2 with the stoppers.

In the retractable door mirror 1 of the present embodiment, the frame 5 is provided with the shaft support 6, and the shaft support 6 is fitted onto the shaft 4. The notches 6A are formed in the shaft support 6, and the shaft support 6 is fitted onto the shaft 4, so as to broaden the tip part of the shaft support 6.

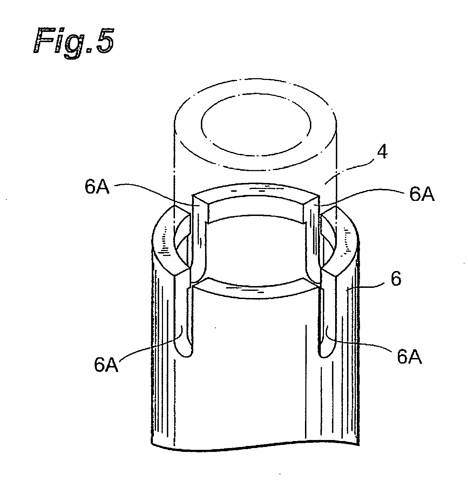

The broadened state of the shaft support 6 is indicated by imaginary lines in Fig. 4, and a state before broadened, by solid lines. As shown in Fig. 4, there is only a small change between diameters of the shaft support 6 before and after broadened, and, specifically, the change is only an increase of about 2 mm in diameter. As shown in Fig. 5, the shaft support 6 in an inserted state of the shaft 4 is in the broadened state. Since the change of diameter is small between in the state before broadened and in the broadened state, when the shaft 4 is inserted into the shaft support 6, the inserting work can be easily performed.

The tip part of the shaft support 6 is broadened in its diameter though the change is small. For this reason, an elastic force to return to the original shape acts on the shaft support 6. This elastic force serves as a force to fasten the shaft 4, and urges the shaft support 6 against the shaft 4; therefore, the shaft support 6 can be kept in contact with the shaft 4, without need for strict dimensional control. Therefore, it is feasible to suppress occurrence of flutter or the like between the shaft 4 and the shaft support 6, without need for strict dimensional control.

Furthermore, in the retractable door mirror 1 of the present embodiment, the notches 6A are formed in the contact part of the shaft support 6 with the shaft 4. The inside diameter of the shaft support 6 is made smaller than the outside diameter of the shaft 4, and the notches 6A are broadened to provide the elastic force. For this reason, the shaft 4 can be restrained by the elastic force of the shaft support 6 itself, without need for use of any particular elasticity providing means. Therefore, since the elastic force can be provided by simply forming the notches 6A, the elasticity providing means can be readily formed and there is no increase in the number of parts in particular.

In addition, in the shaft support 6 of the present embodiment, the notches 6A are formed at four positions as spaced at equal intervals in the circumferential direction of the shaft support 6. For this reason, the shaft 4 can be restrained and supported in a stable state by the shaft support 6.

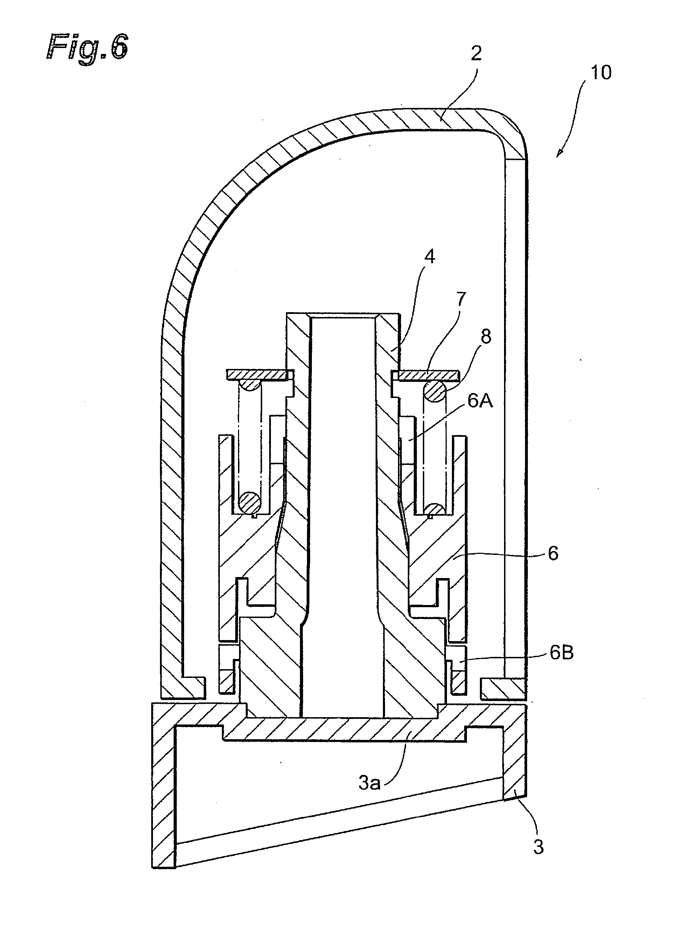

Next, the second embodiment of the present invention will be described. The retractable door mirror of the present embodiment is different from the first embodiment mainly in that second notches are formed. Fig. 6 is a sectional side view of the retractable door mirror according to the second embodiment of the present invention.

As shown in Fig. 6, the retractable door mirror 10 of the present embodiment is provided with the mirror body 2 and mirror base 3 similar to those in the aforementioned first embodiment, the shaft stand 3a is formed in the mirror base 3, and the shaft 4 stands upright on the shaft stand 3a.

The shaft support 6 in the frame 5 is attached to the shaft 4. Notches 6A similar to those in the first embodiment are formed in the tip part of the shaft support 6, and second notches 6B are formed near the base end (lower end) of the shaft 4. The second notches 6B are formed at four positions and at equal intervals in the circumferential direction of the shaft 4 as the notches 6A are. The second notches 6B are fitted in a part with a large diameter near the base end of the shaft 4. The second notches 6B also have a diameter slightly smaller than that of the shaft 4 and have elasticity as the notches 6A do.

When the shaft 4 is fitted into this shaft support 6, the shaft 4 is restrained and supported by the second notches 6B as well as the notches 6A. Therefore, the frame 5 (Fig. 1) can be attached in a firmly restrained state through the shaft support 6 to the shaft 4.

The preferred embodiments of the present invention were described above, and it is noted that the present invention is by no means limited to the above embodiments. For example, the above embodiments showed the applications to the so-called manual type door mirrors, but the present invention is also applicable to automatic door mirrors of a type in which a door mirror is rotated by a driving means such as a motor. Furthermore, the above embodiments showed the formation of the elastic portion by forming the notches 6A in the tip part of the shaft support 6, but it is also possible to adopt a form in which the elastic portion is formed by a separate elastic member using a spring, rubber, or the like.

In the formation of the notches 6A, there are no particular restrictions on the number, arrangement, shape, etc. of the notches. Concerning these number, arrangement, etc., the same also applies to the second notches 6B in the second embodiment. On the other hand, the aforementioned second embodiment had the form in which the second notches 6B, in addition to the notches 6A, were formed, but it is also possible to form the shaft restraining part with elasticity only in the part of the second notches 6B.

## Claims

1. A retractable door mirror (1) comprising:
a mirror base(3) to be fixed to a vehicle;
a shaft (4) standing upright on the mirror base (3);
a frame (5) having a shaft support (6) fitted to the shaft (4), and arranged to rotate around the shaft (4); and
a mirror body (2) attached to the frame (5) and arranged to be retractable in a longitudinal direction of the vehicle with rotation of the frame (5) around the shaft (4);
**characterized in that**
the shaft support (6) has an elastic portion for urging the shaft support (6) circumferentially inward of the shaft (4), which is provided at a contact part between the shaft (4) and the shaft support in (6) the frame (5).

2. The retractable door mirror according to claim 1, wherein the elastic portion is made by forming a notch (6A) in the contact part of the shaft support (6) with the shaft (4), making an inside diameter of the shaft support (6) smaller than an outside diameter of the shaft (4), and by broadening the notch (6A).

3. The retractable door mirror according to claim 2, which can be arranged in a form in which there are a plurality of said notches (6A) and in which the plurality of notches (6A) are arranged spaced at equal intervals in a circumferential direction of the shaft support (6).

## Patentansprüche

1. Einziehbarer Türspiegel (1) mit:
einer an einem Fahrzeug anzubringende Spiegelbasis (3);
einem aufrecht auf der Spiegelbasis (3) stehenden Schaft (4);
einer Fassung (5) mit einem Schaftträger (6), der auf den Schaft (4) aufgesetzt ist, und die um den Schaft (4) drehbar angeordnet ist; und
einem Spiegelkörper (2), der an der Fassung (5) angebracht ist und derart ausgebildet ist, dass sie durch eine Drehung der Fassung (5) um den Schaft (4) in Längsrichtung des Fahrzeugs einziehbar ist;
**dadurch gekennzeichnet, dass**
der Schaftträger (6) einen elastischen Bereich aufweist, um den Schaftträger (6) umfangsmäßig einwärts des Schafts (4) zu drücken, wobei der elastische Bereich in einem Kontaktbereich zwischen dem Schaft (4) und dem Schaftträger (6) in der Fassung (5) vorgesehen ist.

2. Einziehbarer Türspiegel nach Anspruch 1, bei welchem der elastische Bereich gebildet wird, indem eine Kerbe (6A) in dem Kontaktbereich des Schaftträgers (6) mit dem Schaft (4) ausgebildet wird, der Innendurchmesser des Schaftträgers (6) kleiner als der Außendurchmesser des Schafts (4) ausgebildet wird, und die Kerbe (6A) verbreitert wird.

3. Einziehbarer Türspiegel nach Anspruch 2, der derart ausgebildet sein kann, dass mehrere Kerben (6A) vorgesehen sind, und wobei die mehreren Kerben (6A) in gleichmäßigem Abstand voneinander in Umfangsrichtung des Schaftträgers (6) angeordnet sind.

## Revendications

1. Rétroviseur de porte rétractable (1) comprenant:
une embase de miroir (3) á monter à une voiture;
une tige (4) s'étendent en debout sur ladite embase de miroir (3);
un cadre (5) avec un support de tige (6) placé sur ladite tige (4), et agencé pour tourner autour de ladite tige (4); et
un corps de miroir (2) attaché audit cadre (5) et agencé pour être rétractable dans la direction longitudinale de la voiture avec la rotation du cadre (5) autour de la tige (4),
**caractérisé en ce que**
ledit support de tige (6) comprend une partie élastique pour presser ledit support de tige (6) vers l'intérieur, selon la direction circonférentielle, par rapport à ladite tige (4), ladite partie étant prévue dans une partie de contact entre ladite tige (4) et ledit support de tige (6) dans ledit cadre (5).

2. Rétroviseur de porte rétractable selon la revendication 1, dans lequel ladite partie élastique est réalisée en formant une encoche (6A) dans la partie de contact entre le support de tige (6) et ladite tige (4), en faisant le diamètre interne du support de tige (6) étant inférieur au diamètre externe de la tige (4), et en élargissant ladite encoche (6A).

3. Rétroviseur de porte rétractable selon la revendication 2, qui peu être agencé sous une forme dans laquelle plusieurs encoches (6A) sont réalisées et dans laquelle les plusieurs encoches (6A) sont écartées l'une de l'autre en intervalles régulières selon la direction circonférentielle du support de tige (6).
